# EUROPÄISCHE PATENTANMELDUNG

(11) **EP 1 659 327 A1**
(43) Veröffentlichungstag der Anmeldung: **24.05.2006**
(21) Anmeldenummer: 05006749.5
(22) Anmeldetag: 29.03.2005
(51) Int. Cl.: F16L 37/23, F16L 37/00

(54) **Druckluftkupplung zum Stecken und Ziehen**

(30) Priorität: 17.11.2004 DE 102004055385; 25.01.2005 DE 102005003352
(71) Anmelder: Stammer, Arno, 04129 Leipzig (DE)
(72) Erfinder: Stammer, Arno, 04129 Leipzig (DE)

(57) **Zusammenfassung**

Die Erfindung bezieht sich auf Druckluftkupplungen für das Stecken und Ziehen des Kupplungsteckers, wobei die Druckluftkupplung mit federbelastetem Ventil (12) und axial verschiebbarer Verriegelungshülse (1) sowie einem zapfenförmigen Druckausgleichsteil (2) geführt in einem Kupplungskörper (3) mit einer Zusatzrastung (17) und nach außen wirkender Dichtung (13) versehen ist.

## Beschreibung

Die Erfindung bezieht sich auf Druckluftkupplungen für das Stecken und Ziehen des Kupplungsteckers, wobei die Druckluftkupplung mit federbelastetem Ventil und axial verschiebbarer Verriegelungshülse sowie einem zapfenförmigen Druckausgleichsteil geführt in einem Kupplungskörper mit einer Zusatzrastung und nach außen wirkender Dichtung versehen ist sowie auf Aufnahmen mit Bohrungen zur Montage von Druckluftkupplungen.

Druckluftkupplungen ausgeführt mit federbelastetem Ventil und axial verschiebbarer Verriegelungshülse sind bekannt. Dabei werden grundsätzlich die Druckluftkupplungen mit einer Hülsenbetätigung oder entsprechender Hilfseinrichtung zum Trennen der Kupplungsverbindung über ein Gewinde mit der Aufnahme verbunden. Die Aufnahmen werden vorwiegend als Verteiler zum direkten Anschluß an Rohrleitungen oder als Wanddosen zur Befestigung an einer Wandfläche ausgeführt.
Der Nachteil dieser Lösungen besteht darin, daß hierfür nur Druckluftkupplungen mit Gewindeanschluß eingesetzt werden können, deren Kupplungsverbindung über eine Hülsenbetätigung oder entsprechende Hilfseinrichtung durch deren ein- oder zweimaliges Betätigen getrennt werden kann. Die Aufnahmen für die Wandbefestigung verfügen zwischen Drucklufteingang und Gewindeanschluß über keinen Raum zur Stömungsberuhigung mit nach außen führendem gesonderten Meßanschluß, wodurch Strömungsverluste auftreten und beispielsweise Druckmessungen erschwert werden.

Die bekannten Druckluftkupplungen mit Gewindebefestigung und axial verschiebbarer Veriegelungshülse sowie zapfenförmigen Druckausgleich für das Stecken und Ziehen des Kupplungssteckers gewähdeisten einen exakten Ausgleich der an der Verriegelungshülse wirkenden Axialkräfte, sichert jedoch bei Zugkräften am Kupplungsstecker nicht umfassend die Verbindung von Druckluftkupplung und Kupplungsstecker im gesamten Arbeitsprozess. Hinzu kommt, daß die bekannten Ausführungen des Druckausgleichsteiles sehr aufwendig sind.

Das Ziel der Erfindung besteht darin, eine Druckluftkupplung mit federbelastetem Ventil, axial verschiebbarer, einfach nach außen abdichtender Verriegelungshülse und zapfenförmigen Druckausgleich geführt in einem Ventilkörper mit einer Zusatzrastung zu schaffen, die eine zuverlässige Verbindung im gesamtem Arbeitsprozess sichert und ein Trennen der Kupplungsverbindung durch einfaches Ziehen am Kupplungsstecker gestattet, wobei auch ein schnelles Trennen und Verbinden der Druckluftkupplung mit den die Konturen von Ventilkörper und Druckausgleichteil aufweisenden Aufnahmen ermöglicht werden soll und durch eine spezifische geometrische Gestaltung der Aufnahmen für Wandbefestigung ein strömungsberuhigter Raum zwischen Drucklufteingang und Anschluß Druckluftkupplung mit einem Meßanschlusses gesichert wird.

Für die Drucklutkupplung geschieht das erfindungsgemäß dadurch, daß in dem Kupplungskörper eine Kugelrastrille angeordnet wird, in die die Kugeln, nach der Verbindung der Druckluftkupplung mit dem Kupplungsstecker einfallen können und damit eine Rastkraft entsteht, die ein leichtes Ziehen des Kupplungsteckers verhindert.
Durch die Anordnung einer Dichtung im Ventilkörper, die auf der Verriegelungshülse gleitet wird die Trennung zur Außenluft und damit eine einfache Ausführung des Druckausgleichsteiles gewährleistet.

Für die Aufnahmen geschieht das erfindungsgemäß dadurch, daß die Druckluftkupplung mit der die Konturen des Ventilkörpers und des Druckausgleichsteiles enthaltenen Aufnahme formschlüssig verbunden wird.

Für die Aufnahmen für Wandbefestigung geschieht das erfindungsgemäß dadurch, daß unmittelbar nach dem Drucklufteingang in der Aufnahme ein Raum angeordnet wird, von dem der Meßanschluß und die beispielsweise mit einem Gewinde versehenen Aufnahmebohrungen für die SVK abzweigen. Bei der Ausführung der Aufnahme mit Wandbefestigung ist für ein optimales Durchfluß- und Funktionsverhalten von efindungsgemäßer Bedeutung, daß der Winkel für den Druckmeßanschluß zur Wandbefestigung etwa 80° und der Winkel der Aufnahmebohrungen für die SVK zur Wandbefestigung etwa 20° beträgt.

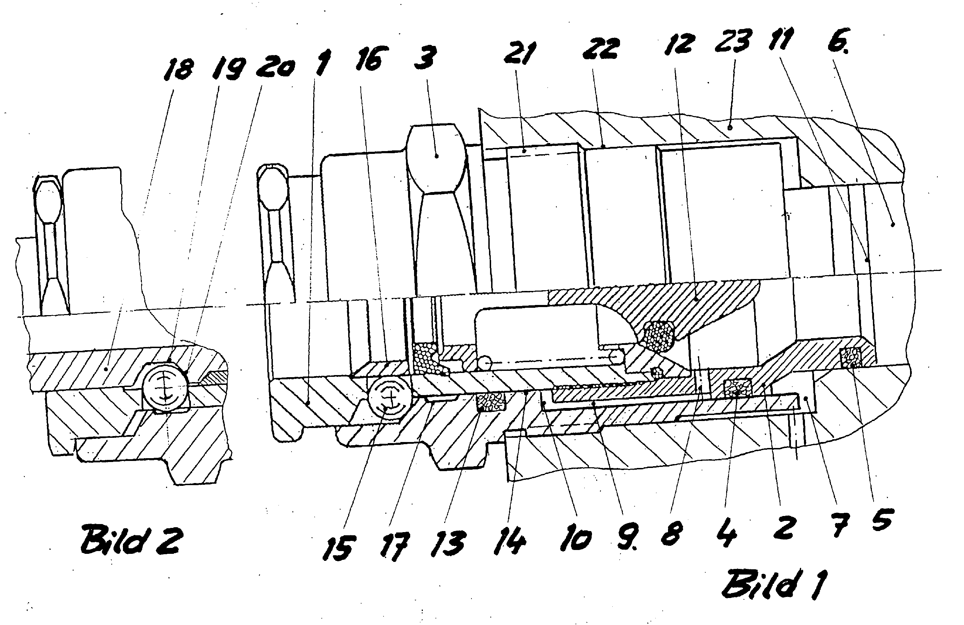

Im folgenden ist die Erfindung an Ausführungsbeispielen dargestellt.
Es zeigt
Bild 1:
   Längsschnitt einer Druckluftkupplung mit federbelastetem Ventil, axial verschiebbarer Verriegelungshülse mit zapfenförmigen Druckausgleich geführt in einem Kupplungskörper mit Rastrille für Gewindebefestigung ohne Kupplungsstecker
Bild 2:
   Druckluftkupplung gemäß Bild 1 mit verriegeltem Kupplungstecker
Bild 3
   Längsschnitt einer Druckluftkupplung mit federbelastetem Ventil, axial verschiebbarer Verriegelungshülse mit zapfenförmigen Druckausgleich geführt in einem Kupplungskörper mit Befestigungsrille
Bild 4:
   Hauptansicht der Aufnahme für Wandbefestigung mit zwei Druckluftkupplungen und Schittdarstellung der Aufnahme mit Drucklufteingang, strömungsberuhigtem Raum und Meßanschluß im Winkel α sowie Aufnahmebohrung mit Druckluftkupplung für Gewindebefestigung im Winkel β.

Entsprechend Bild 1 wird die axial verschiebbare Verriegelungshülse 1 und das mit ihr verbundene Druckausgleichsteil 2 in dem Kupplungskörper 3 geführt. Das Druckausgleichsteil 2 besitzt die Dichtungen 4 und 5, die den Druckraum 6 zu dem mit der Umgebung verbundenen Raum 7 abdichten. Der Druckraum 6 ist über die Bohrung 8 auch mit dem Innenraum 9 des Kupplungskörpers 3 verbunden. Die Flächen 10 und 11 gewährleisten den axialen Druckausgleich. In der dargestellten Ausgangsstellung ist das für die erfinderische Lösung nicht im Detail wichtige Ventil 12 zur Umgebung geschlossen.
Durch den Dichtring 13 im Kupplungskörper 3, gleitend auf dem Führunsdurchmesser 14 der Verriegelungshülse 1 wird der Druckraum 6 und 9 zur Umgebung abgedichtet. Die in der Verriegelungshülse 1 befindlichen Kugeln 15 werden durch den Kupplungskörper 3 und die Hülse 16 in der dargestellten Lage gehalten. In dem Kupplungskörper 3 ist die im Durchmesser zu Führungsdurchmesser 14 vergrößerte Rastrille 17 angeordnet.

Wird gemäß Bild 2 der Kupplungsstecker 18 mit international gebräuchlichem Steckerprofil in die Verriegelungshülse 1 gesteckt, wird die Hülse 16 nach rechts verschoben und die Kugeln 17 können in die Rille 19 des Kupplungssteckers 18 einfallen. Damit gelangt die Verriegelungshülse 1 in die dargestellte rechte Endlage und Druckluftkupplung und Kupplungsstecker sind miteinander verriegelt.
In der dargestellten Endlage werden die Kugeln 15 durch die Schräge 20 des Kupplungssteckers 18 in die Rastrille 17 gedrückt, wodurch sich eine Rastkraft ergibt, die der Trennung des Kupplungssteckers 18 entgegenwirkt. Über das Gewinde 21 und die Zentrierzapfen 22 wird der Ventilkörper 3 mit der Aufnahme 23 verbunden.

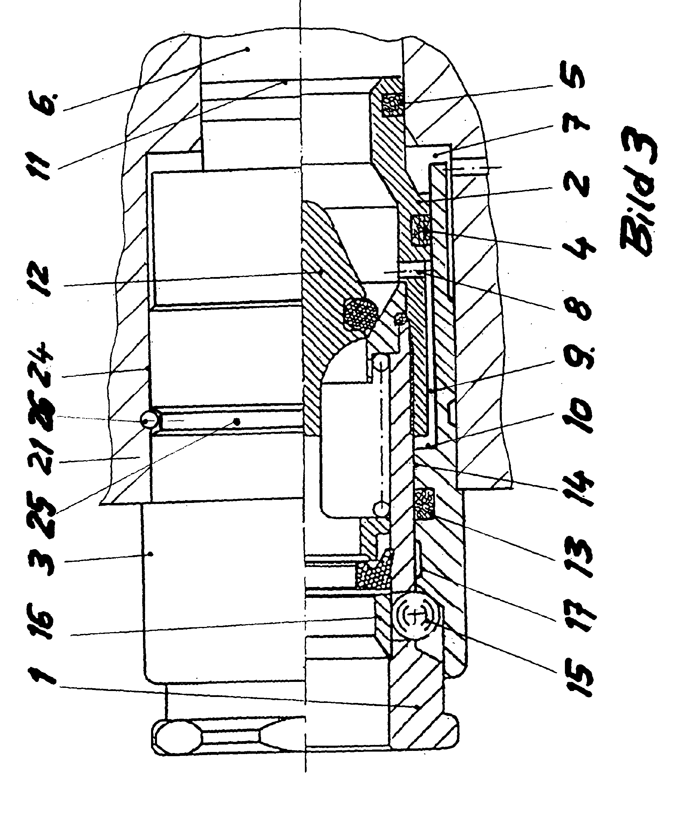

Bild 3 unterscheidet sich von Bild 1 nur dadurch, daß der Ventilkörper 3 kein Gewinde 21 mit Sechskant zur Verbindung mit der Aufnahme 23 besitzt, sondern nur einen Zapfen 24 mit Rille 25 enthält und über beispielsweise einen Zylinderstift oder Gewindestift 26 formschlüssig mit der Aufnahme verbunden wird.

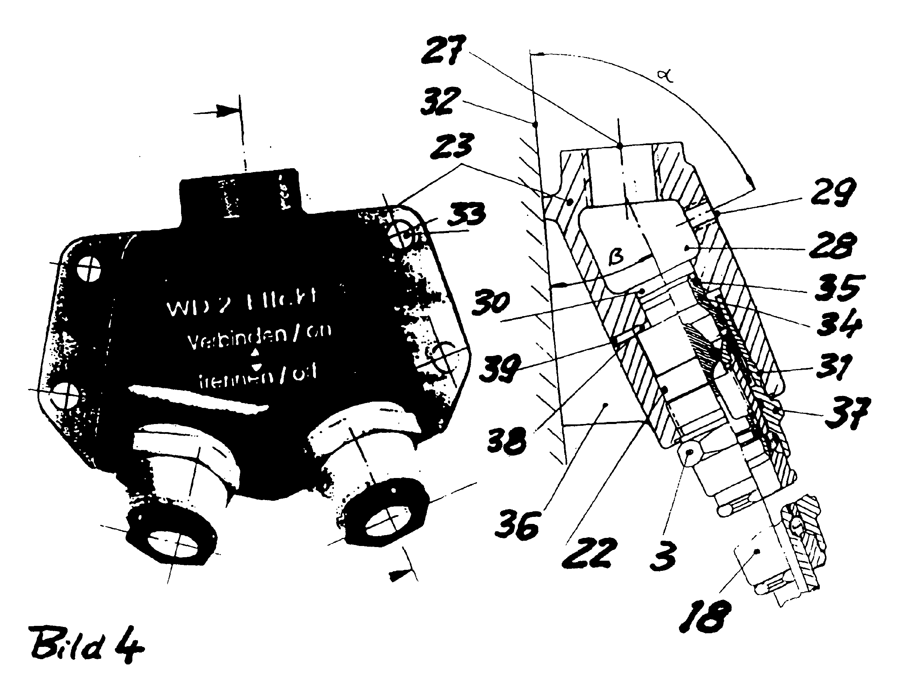

Entsprechend Bild 4 wird der Aufnahme 23 die Druckluft über Anschluß 27 zugeführt. Unmittelbar nach Anschluß 27 ist der strömungsberuhigte Raum 28 mit Meßanschluß 29 angeordnet. Von dem strömungsberuhigten Raum 28 zweigen die Aufnahmebohrungen 30 mit Gewindebefestigung 31 für den Kupplungskörper 3 ab. Die Aufnahme 23 ist für die Befestigung an einer Wandfläche 32 mittels Befestigungsbohrungen 33 ausgeführt. Hierbei führt der Meßanschluß 29 im Winkel α und die Aufnahmebohrungen 30 im Winkel β zur Wandbefestigung 32 aus der Aufnahme 23 heraus.
Im Bild 4 sind in der Aufnahme 23 der Kupplungskörper 3 zum Trennen der Kupplungsverbindung durch Ziehen am Stecker 18 ausgeführt. Dabei wird der Raum 28 durch die Führungsbohrung 30 und den Dichtungszapfen 34 mit Dichtung 35 von der Außenluft 36 getrennt. Der in Aufnahme 23 zur Druckentlastung befindliche Raum 37 wird durch eine Entlüftungsbohrung 38 mit der Außenluft 36 verbunden.

## Patentansprüche

1. Druckluftkupplung mit axial verschiebbarer Veriegelungshülse und zapfenförmigem Druckausgleichsteil geführt in einem Kupplungskörper, **dadurch gekennzeichnet, dass** der Kupplungskörper am Führungsdurchmesser der Verriegelungshülse eine im Durchmesser vergrößerte Kugelrastrille aufweist.

2. Druckluftkupplung nach Anspruch 1 **dadurch gekennzeichnet, dass** der Kupplungskörper eine auf der Verriegelungshülse gleitende Dichtung zur Trennung des Druckraumes von der Außenluft besitzt.

3. Druckluftkupplung nach Anspruch 1 und 2, **dadurch gekennzeichnet, dass** der Kupplungskörper ein Außengewinde und einen Zentrierzapfen besitzt.

4. Druckluftkupplung nach Anspruch 1 und 2 , **dadurch gekennzeichnet, dass** der Kupplungskörper einen Zentrierzapfen mit einer Eindrehung besitzt.

5. Aufnahme für Wandanbau mit einer oder mehreren Bohrungen für die Montage von Druckluftkupplungen, **dadurch gekennzeichnet daß** nach der Drucklufteintrittsbohrung in der Aufnahme ein vergrößerter strömungsberuhigender Raum mit einem im Winkel zur Anbauwand von gleich kleiner 90° nach außen führenden Meßanschluß und an den Raum angrenzend Gewindebohrungen für die Montage der Druckluftkupplungen nach unten im Winkel von gleich kleiner 50° zur Anbauwand angeordnet sind.

6. Aufnahme mit einer oder mehreren Bohrung für die Montage von Druckluftkupplungen, **dadurch gekennzeichnet daß** in der axialen Verlängerung der Bohrung eine im Durchmesser kleinere Führungsbohrung als Gegenstück für einen Dichtungszapfen einer Druckluftkupplung angeordnet ist, der den Innenraum der Aufnahme nach außen trennt.

7. Aufnahme mit einer oder mehreren Bohrungen für die Montage von Druckluftkupplungen nach Anspruch 6, **dadurch gekennzeichnet daß** zwischen Bohrung und kleinerer Führungsbohrung eine nach außen führende Entlüftungsbohrung angeordnet ist.

8. Aufnahme mit einer oder mehreren Bohrungen für die Montage von Druckluftkupplungen nach Anspruch 5 und 6 und **dadurch gekennzeichnet daß** die Aufnahme und die Kontur für die Bohrung zur Montage der Druckluftkupplung aus zwei getrennten Teilen und Werkstoffen besteht.
